# EUROPEAN PATENT APPLICATION

(11) **EP 2 532 569 A1**
(43) Date of publication of application: **12.12.2012**
(21) Application number: 11169408.9
(22) Date of filing: 10.06.2011
(51) Int. Cl.: B62D 33/06

(54) **A drawer useable as a footstep**

(71) Applicant: Stjernfjädrar AB, 524 21 Herrljunga (SE)
(72) Inventor: Larsson, Jonas, 441 43 ALINGSÅS (SE)
(74) Representative: Lind, Urban Arvid Oskar

(57) **Abstract**

A drawer (4) provided with a drawer front (4e), said drawer being adapted to be slidable so that said drawer can be slid into and out of a drawer space within a vehicle along a substantially horizontal plane, wherein said drawer further comprises a guide structure (8a-b,9a-b) for allowing slidable movement of said drawer front relative to the drawer in a plane of the drawer front, so that, when the drawer is used in the vehicle, said drawer front can be slid between an upper position where a lower side of the drawer front is distanced from a floor of the vehicle and a lower position where the lower side of the drawer front is supported by the floor of the vehicle.

## Description

### Field of the invention

The present invention relates to a drawer for use within a vehicle, as well as a vehicle comprising such a drawer.

### Background of the invention

In various vehicles, especially in trucks and/or commercial vehicles, there is often a need to provide one or more sleeping area within the vehicle. By way of example, vehicles can often include one or more sleeping bunks or berths upon which one member of a driving team can rest while the other operates the vehicle, or which allows both members of the team to rest when parking the vehicle in a suitable rest area or stop. The cabs of lorries and trucks often include a sleeping area behind the driver and passenger chairs. One or more sleeping bunks are placed above or alongside each other in the sleeping area. Further, to use the available space in the sleeping area efficiently there is often a storage area in the form of one or more drawers arranged in a drawer space beneath the sleeping bunks.

However, for sleeping bunks that are arranged in the upper part of the cab it may be hard to reach the sleeping bunk, making it difficult to climb in and out of the upper sleeping bunk. Conventionally, this problem has been alleviated by means of a ladder, or a deployable stair as suggested in patent document US 2008/0164724.

However, although a deployable stair facilitates climbing in and out of the bed, such as solution is a rather complex and costly. Further, many known stair arrangements also requires much space, which is a scarce resource within a truck cab. Moreover, many persons may find a deployable stair or a ladder inconvenient, and, when there is a drawer available beneath the bed, many persons tend to use the drawer, in its pulled out state, as a footstep to reach the sleeping bunk.

However, the drawer is not designed for this type of use, and the load associated herewith cause a lot of stress on the drawer, and especially on the drawer slides that allows the drawers to be slid in and out of the drawer space. Therefore, the drawer and the associated drawer slides may be damaged.

The above-discussed problems relate to truck cabs. However, similar problems are found also in other types of vehicles, such as in trains, boats, caravans, trailers, campers, etc.

### Summary of the invention

It is therefore an object of the present invention to at least partly overcome these problems, and to provide an improved drawer that may withstand the load that arises when the drawer e.g. is used as a footstep to reach a sleeper bunk in the upper part of a sleeping area.

These, and other objects that will be apparent from the following, are achieved by a drawer, and a vehicle comprising such a drawer, according to the appended claims.

According to one aspect of the present invention, there is provided drawer for use in a vehicle, the drawer comprising a drawer body and a drawer front, said drawer being adapted to be slidable so that said drawer can be slid into and out of a drawer space within the vehicle along a substantially horizontal plane, wherein said drawer further comprises a guide structure for allowing slidable movement of said drawer front relative to the drawer body, preferably essentially in a plane of the drawer front, so that said drawer front can be slid between an upper position where a lower side of the drawer front is distanced from a floor of the vehicle and a lower position where the lower side of the drawer front is supported by the floor of the vehicle.

By "support" is in the context of this application meant any support, direct or indirect, provided by the floor of the vehicle to the drawer front. Thus, the drawer front may in its lower position rest directly on the floor, or rest on the floor via a support structure, arranged on the drawer front and/or the floor.

By a "substantially horizontal plane" is here meant a plane that plane that deviates less than 20° from a horizontal plane, and more preferably the deviation may be less than 10°, or most preferably less than 5°. More specifically, it is preferred that the plane is horizontal, or is inclined downwardly in a direction into the drawer space. In the latter case, the inclination will, by means of gravity, provide a force tending to restore and maintain the drawer in its retracted position.

By "drawer body" is here meant any part of the drawer forming the drawer, apart from the drawer front. In particular, the drawer body would in most embodiments comprise a drawer bottom, and also preferably at least one of a rear wall and side walls. The drawer body may also comprise an inner front wall.

The present invention is based on the realization that by allowing the drawer front to slide from its normal upper position, into a lower position where the lower side of the drawer front is supported by the vehicle floor, the load on the drawer slides that allow the drawer to be slid in and out of the drawer space is greatly reduced. Therefore, a person can step on the upper surface of the drawer front to reach a bed in the upper part of the sleeping area without damaging the drawer or the associated drawer slides. Further, as the lower edge is pressed against the floor of the vehicle, the drawer is efficiently prevented from sliding in or out of the drawer space as the person steps on the drawer front. This reduces the risk that a person slips and falls, when using the drawer as a foot step.

The drawer may further comprise at least one resilient element adapted to urge said drawer front to the upper position, but to yield when a load is applied on an upper surface of the drawer front, such as when a person steps on the upper surface. An advantage obtained hereby is that, as a person places his or her weight on the upper surface of the drawer front, the drawer front can slide into the lower position, where it can be used as a footstep, and then automatically return to its upper position, when the person removes his or her foot. Thus, the drawer front will remain in its normal state during normal operation, and will only assume its footstep position when biased.

The at least one resilient element may comprise a resilient element which is stretched as the drawer front moves downwards relative to the drawer body. As an alternative or a complement, it is possible to utilize a resilient element arranged in such a way that the resilient element is elastically compressed as the drawer front moves downwards relative to the drawer body. The at least one resilient element preferably is at least one of a coil spring, an elastic ribbon, a rubber element, and a compression spring.

The drawer front may be arranged in a plane that deviates less than 20° from a plane normal to the horizontal plane, more preferably the deviation may be less than 10°, or most preferably less than 5°.

The guide structure may include elements arranged on the drawer front that are slideably engaged with elements arranged on the sides or an inner front wall of the drawer body. In case the guide structure is arranged on the side walls of the drawer body, there is no need for an inner front wall, and the front wall may then solely be constituted by the drawer front. However, by providing an inner front wall, to which the drawer front is displaceably connected, the stability of the drawer is improved. Further, the size of the walls forming the interior space of the drawer will not be affected by displacement of the drawer front, which is advantageous e.g. if the drawer is crammed with goods and items. In case an inner front wall is provided, the drawer body may form a complete drawer in itself, whereby the front wall forms an attached outer front to said drawer.

In case an inner front wall is provided, the front wall is preferably arranged on the inner front wall so that the upper end of the front wall extends above the inner front wall when in the upper position, and still extends above the inner front wall, or comes in level with the inner front wall, when in the lower position.

One of the elements of the guide structure may be a notch and the other one of the elements (8a,9a,8b,9b) may be a protrusion adapted to slidably engage the notch. This enables a simple and robust solution that can be provided at a low cost.

An upper surface of the drawer front may preferably form a stepping surface.

The stepping surface may preferably include a suitable friction surface, such as friction strips, to prevent slipping thereby reducing the risk of injuries.

The stepping surface may have a depth between 50 mm and 100 mm.

An underside of the stepping surface may be provided with a recess that forms a gripping handle that facilitates pulling the drawer out of the drawer space.

The stepping surface may protrude out from the drawer space also when the drawer has been fully retracted into the drawer space.

A lower surface of the drawer front may be provided with a resilient element, such as a rubber layer.

The vehicle may be any type of vehicle, such as such as trains, boats, caravans, trailers, campers, etc. However, in a preferred embodiment, the vehicle is a truck and the drawer may be arranged in a drawer space within a cab of the truck.

Furthermore, the drawer according to the present invention may advantageously be included in a vehicle, further comprising a sleeper bunk wherein the drawer is arranged within a drawer space beneath the sleeper bunk.

By means of these additional aspects of the invention, similar objects and advantages as discussed above in relation to the first aspect of the invention are obtainable.

### Brief description of the drawings

These and other aspects of the present invention will now be described in more detail, with reference to the appended drawings showing a currently preferred embodiment of the invention.
Figs. 1 a-1 b are schematic partially sectional perspective views of a truck cab illustrating a drawer in accordance with an embodiment of the invention, shown in a retracted and pulled out position, respectively.
Fig. 2 is a schematic perspective view of the drawer in more detail.
Figs. 3a-c are schematic perspective views, partially sectional, of the drawer in Fig. 2, showing an example of a guide structure that can be used to achieve a vertically moveable drawer front.
Figs. 4a-c are a schematic perspective views, partially sectional, of the drawer in Fig. 2, showing another example of a guide structure that can be used to achieve a vertically moveable drawer front.
Figs. 5a-b are schematic perspective views, partially exploded, of the drawer in Fig. 2, showing two further examples of a guide structure that can be used to achieve a vertically moveable drawer front.
Figs. 6a-b are schematic side views, illustrating a normal state of the drawer and a foot step state of the drawer, respectively, in relation to the embodiments of Figs. 3 and 4.
Figs. 7a-b are schematic side views, illustrating a normal state of the drawer and a foot step state of the drawer, respectively, in relation to the embodiments of Fig. 5.

### Detailed description

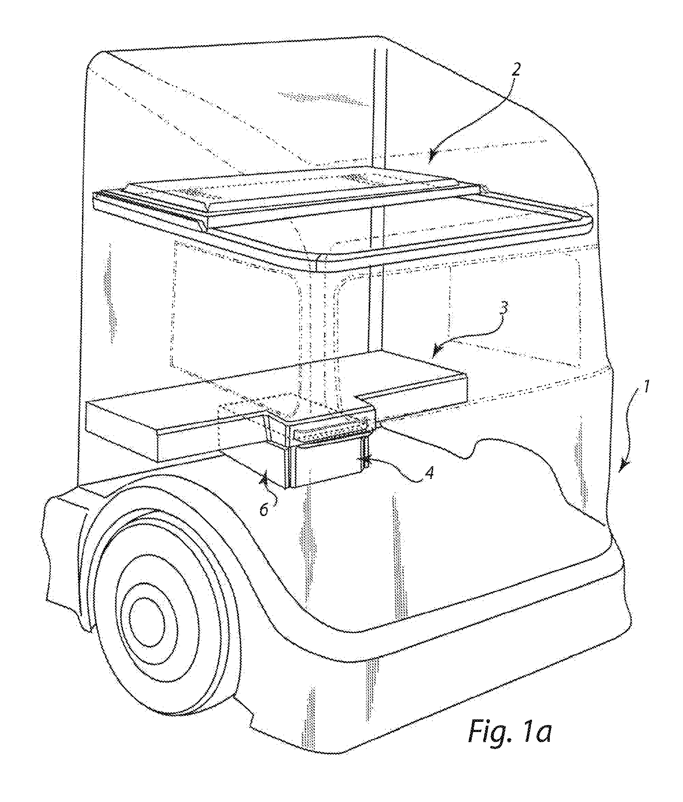

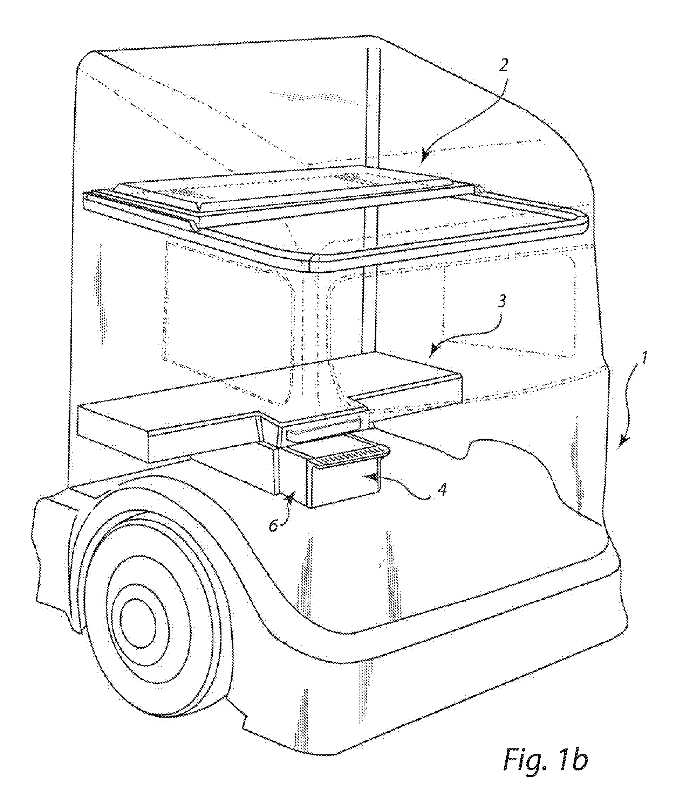

With reference to Figs. 1-7, a drawer useable as a footstep according to a currently preferred embodiment of the present invention will now be described. The drawer is here arranged beneath an upper and a lower sleeping bunk within a truck cab and can be used as a foot step to facilitate climbing into and out of the upper sleeping bunk. However, the drawer may also be used to other ends, such as being used to reach a shelf or cabinet in the upper part of the cab. Further, the drawer may also be used in other types of vehicles, such as trains, boats, caravans, trailers, campers, etc. Accordingly, even though the following detailed example is related to a drawer that is arranged beneath a lower sleeping bunk and usable as a foot step to reach an upper sleeping bunk in a truck cab, it is to be acknowledged by the skilled reader that this is merely intended as a non-limiting example.

With reference to Fig. 1, a truck cab 1 comprises an upper 2 and a lower 3 sleeping bunk, and a drawer 4 arranged in a drawer space beneath the lower sleeping bunk. The drawer can be used for storing personal belongings or other objects. The drawer space is here a rectangular cavity defined in a support structure 6 that supports the lower sleeping bunk. However, any appropriate drawer space can be employed depending on circumstances as would be appreciated by those in the art based on this disclosure. Fig. 1 a illustrates the drawer 4 in a retracted position, whereas Fig. 1 b illustrates the drawer in a in puller out position.

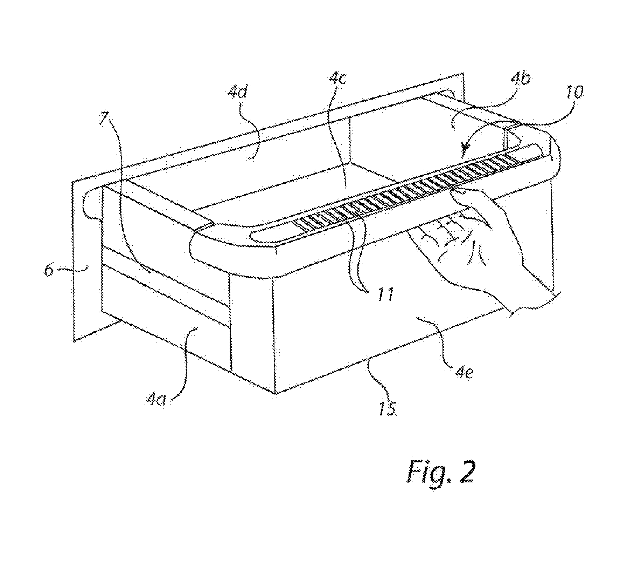

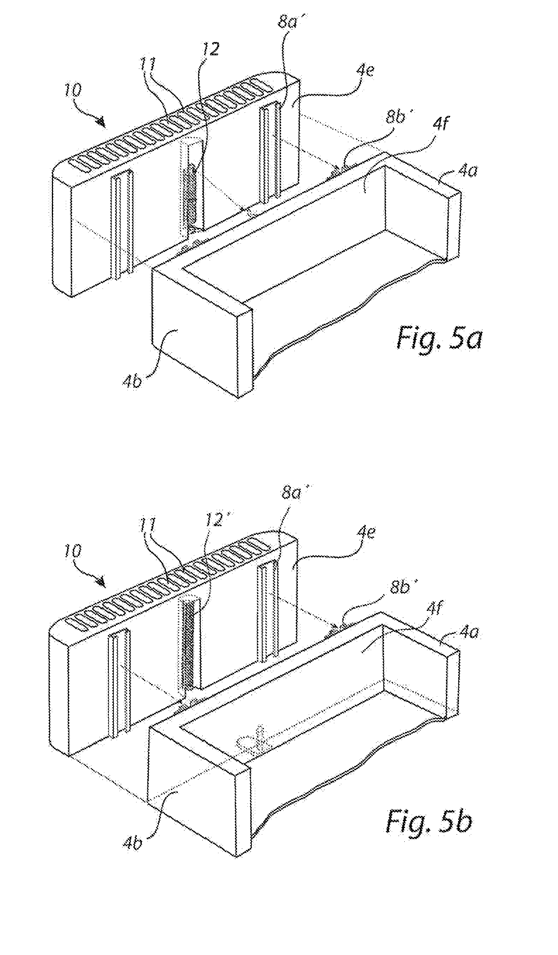

With further reference to Fig. 2, the drawer comprises a drawer body, which typically includes side walls 4a-b, a bottom 4c and a rear wall 4d. In some embodiments, the drawer body may also comprise an inner front wall 4f (as best seen in Fig. 5). However, depending on the use and context of the drawer, the drawer body may e.g. only comprise a bottom, only comprise a bottom and a rear wall, only comprise a bottom and side walls, etc.

Attached to the drawer body is a drawer front 4e. The drawer can be mounted on the support structure 6 by drawer slides, to be moveable between a retracted and pulled out position, as is well known in the art. For instance, the drawer slides may have elements 7 that are attached to the drawer sides 4a-b and that slide on elements (not shown) mounted on the confronting vertical walls of the support structure. The drawer slide may e.g. use plastic friction slides, or bearings slide. The drawer slides allow the drawer to be slid into and out of the drawer space along a substantially horizontal plane.

Further, an upper surface of the drawer front forms a stepping surface 10. The stepping surface preferably has an extension in the sliding direction of the drawer (referred to as depth, D) between 50 mm and 100 mm. Preferably, the stepping surface includes suitable friction surface, such as friction strips 11, to prevent slipping. An underside of the stepping surface can have a recess (not shown) that forms a gripping handle to facilitate for a user to pull out the drawer.

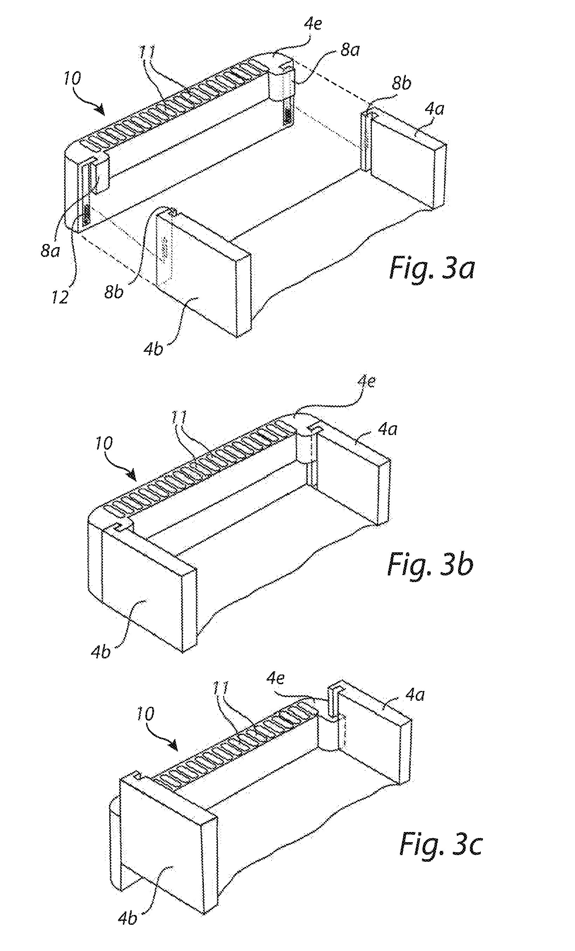

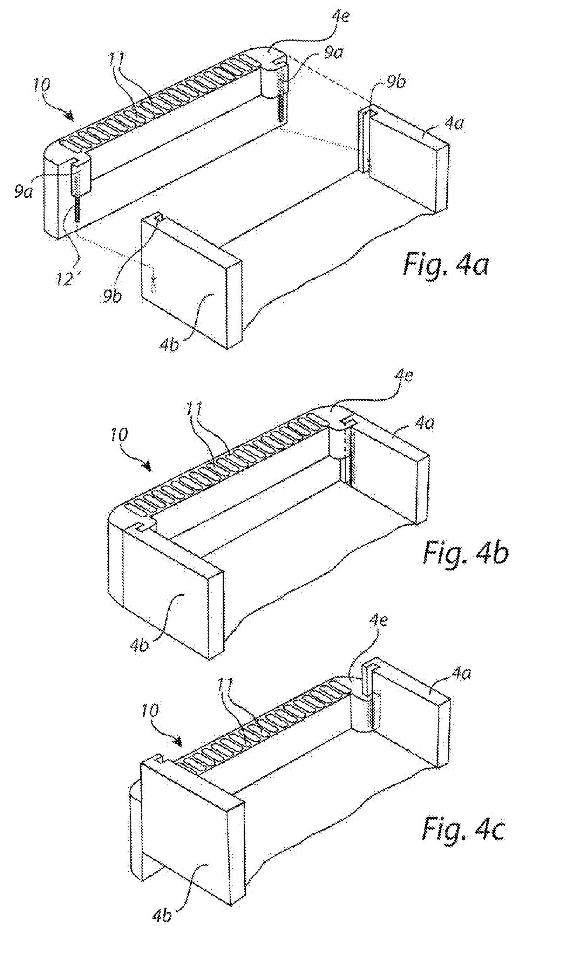

Figs. 3 and 4 illustrate embodiments in which the drawer body does not comprise any inner front wall. Instead, the drawer front functions also as a front wall of the drawer.

Referring to Figs. 3a and 4, the drawer front 4e is mounted on the drawer sides 4a-b by guide structures 8a-b, 9a-b for allowing vertical slidable movement of the drawer front 4e relative to the rest of the drawer.

In the example illustrated in Fig. 3a, the guide structures have elements 8a,9a arranged at the drawer front that are slideably engaged with elements 8b,9b on the corresponding sides of the drawer. Here, the elements on the corresponding sides of the drawer are linear notches 8b,9b formed in the drawer sides, and the elements on the drawer front are L-shaped protrusions 8a,9a with tips that forms linear rails that slidably engage the notches 8b,9b. The surface of the notches 8b,9b and the L-shaped protrusions 8a,9a may be made of plastic, metal or other suitable material so as to form friction slides.

However, many other alternative guide structures serving the same purpose and function are also feasible. For example, the elements on the drawer sides may be T-shaped protrusions that protrude from the end faces of the drawer sides, and the elements on the drawer front may be channels adapted to receive and slidably engage the T-shaped protrusions.

Thus, the guide structures of Figs. 3 and 4 are merely intended as non-limiting examples, and any appropriate guide structure can be employed depending on circumstances as would be appreciated by those in the art based on this disclosure. Moreover, although these examples utilize friction slides, more elaborate bearings slide may also be utilized.

In case the drawer body comprises an inner front wall, the guide structure may be arranged in the interface between the inner front wall and the drawer front. Such embodiments are illustrated in Fig. 5. Here, one or several notches or channels 8a' are provided on either the inner front wall or on the drawer front - in the illustrative example on the drawer front - and arranged to slidably engage with protruding parts 8b', such as L-former protrusions, on the corresponding part.

The above described guide structures allow the drawer front to move vertically in relation to the drawer between an upper position (normal state, illustrated e.g. in Figs. 3b and 4b) and a lower position (foot step state, illustrated e.g. in Figs. 3c and 4c). Although the movement of the drawer front here coincides with the vertical plane, the movement may deviate from the vertical plane. However, the deviation is preferably less than 20°, more preferably less than 10°, and most preferably less than 5°.

Preferably, the drawer further comprises a resilient element 12 adapted to urge the drawer front 4e to its upper position, but to yield when a person steps on the stepping surface 10 so as to allow vertical movement downwards. In the embodiment illustrated in Figs. 3a-c, this is achieved by a coil spring 12, fixedly attached to the drawer side 4a,4b and to the bottom of the drawer front, so that the coil spring is elastically stretched as the drawer front is moved downwards relative to the drawer. A similar arrangement with a coil spring 12 is illustrated in the embodiment shown in Fig. 5a. Instead of a coil spring, an elastic band or any other suitable elastic element can be used.

Other arrangements are also feasible. For instance, as exemplified in Figs. 4a-c, a resilient element 12' can be arranged so as to be compressed as the drawer front 4 is moved downwards relative to the rest of the drawer. This can e.g. be achieved by arranging a compression spring, rubber element, or any other suitable elastic element, in a pocket in the drawer front. An element that protrudes from the drawer side is then received by the lower end of the pocket so as to cause the resilient element to compress when the drawer front moves downwards relative to the drawer side. A similar arrangement is illustrated in Fig. 5b.

In the illustrated examples, one or two resilient elements are used. However, in all the embodiments, it is possible to use only one resilient element, two resilient elements, or more than two resilient elements. Moreover, an alternative to using a resilient element, is to provide a locking device that releasably locks the drawer front to the rest of the drawer in its upper position, e.g by a snap lock. The user may then manually move the drawer front from the lower to the upper position after the drawer has been used as a foot step.

The displaceable distance of the drawer front may vary depending on the distance between the lower end of the drawer front (when it is in its upper position) and the vehicle floor. However, in a typical application the displaceable distance is between 50 and 300 mm, and more typically between 50 and 100 mm.

Fig. 1 a illustrates the drawer 4 fully retracted into the drawer space.

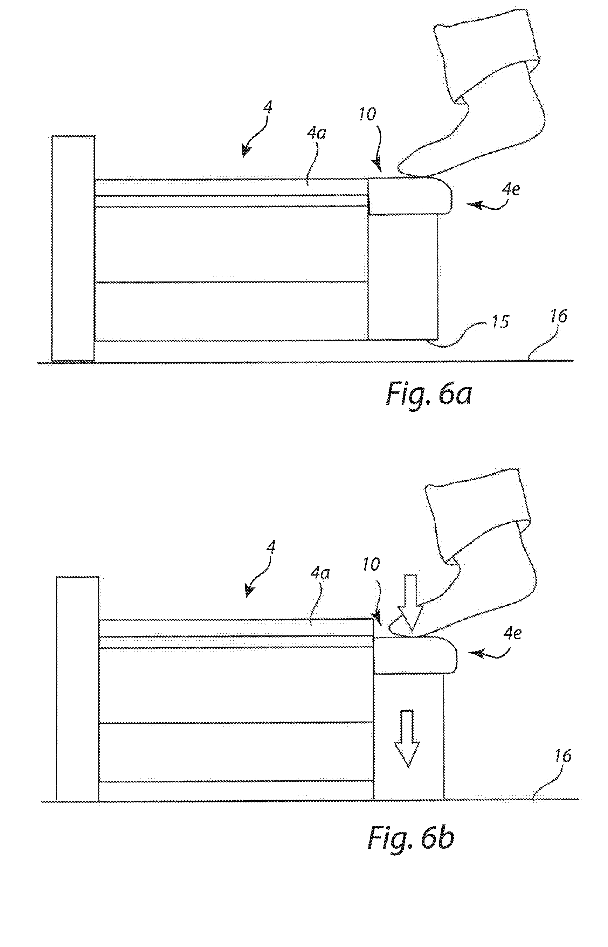

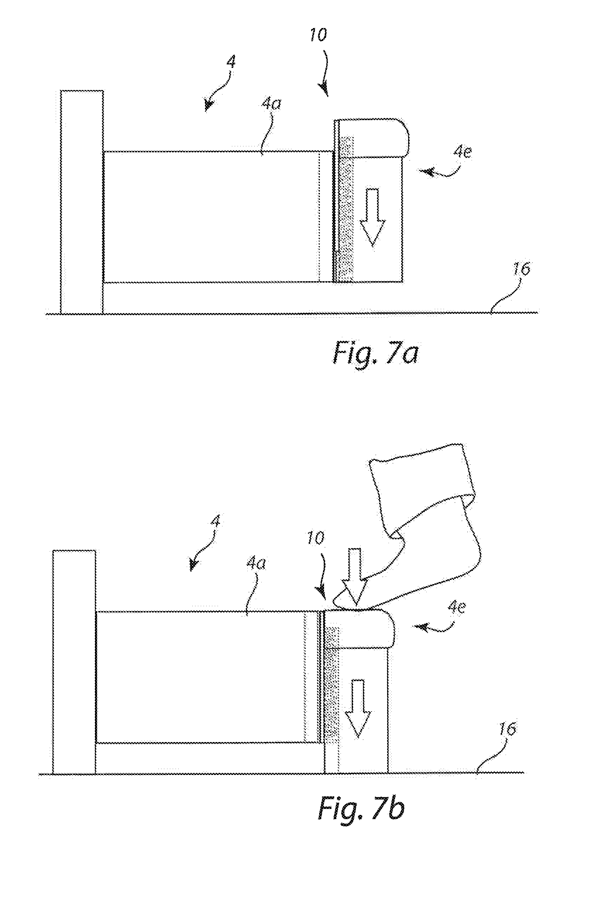

As illustrated in Fig. 2A, a person may grasp the gripping handle and pull out the drawer 4 . The person can then put his or her foot on the stepping surface 10 of the drawer front, when the drawer is in its pulled out state, and use his or her weight to press down the drawer front 4e from its upper position (as illustrated in Figs. 6a and 7a) to the lower position (as illustrated in Figs. 6b and 7b) where the lower end 15 of the drawer front is supported by the vehicle floor. Thus, as the person steps on the foot step to reach the upper sleeper bunk, his or her weight is transferred through the front wall to the floor.

As illustrated schematically in Figs. 6a and 6b, the upper part of the drawer front may, when in the upper position, be in level with the upper part of the drawer body. As a consequence, the upper part of the drawer front will, when in the lower position, be at a lower level than the upper part of the drawer body. Alternatively, the upper part of the drawer front may, when in the upper position, extend above the upper part of the drawer body, as illustrated in Fig. 7a. As a consequence, the upper part of the drawer front may, when in the lower position, be in level with or still extend above the upper part of the drawer body, as is illustrated in Fig. 7b.

According to an alternative embodiment, the arrangement may be such that the drawer front, including the stepping surface 10, protrudes out from the drawer space also when the drawer 4 has been fully retracted into the drawer space. Thereby, a person does not have to pull out the drawer from the drawer space to use it as a foot step.

The drawer body and drawer front may be made of a plurality of different materials, and e.g. plastic material, composite material, wood, metal, such as steel or aluminum, etc. Further, the drawer and/or drawer body can be made of various combinations of these or other different materials. The support structure and guide structure can also be made of various materials, and e.g. the same material(s) as discussed above.

The person skilled in the art realizes that the present invention by no means is limited to the preferred embodiments described above. On the contrary, many modifications and variations are possible within the scope of the appended claims.

## Claims

1. A drawer for use in a vehicle, the drawer comprising a drawer body and a drawer front, said drawer being adapted to be slidable so that said drawer can be slid into and out of a drawer space within the vehicle along a substantially horizontal plane, wherein said drawer further comprises a guide structure for allowing slidable movement of said drawer front relative to the drawer body, preferably essentially in a plane of the drawer front, so that said drawer front can be slid between an upper position where a lower side of the drawer front is distanced from a floor of the vehicle and a lower position where the lower side of the drawer front is supported by the floor of the vehicle.

2. The drawer according to claim 1, further comprising at least one resilient element adapted to urge said drawer front to the upper position, but to yield when a load is applied on an upper surface of the drawer front, such as when a person steps on the upper surface.

3. The drawer according to claim 1 or 2, wherein the at least one resilient element comprises a resilient element which is stretched as the drawer front moves downwards relative to the drawer body.

4. The drawer of any one of the preceding claims, wherein the at least one resilient element comprises a resilient element which is compressed as the drawer front moves downwards relative to the drawer body.

5. The drawer of any one of the preceding claims, wherein the at least one resilient element is at least one of a coil spring, an elastic ribbon, a rubber element, and a compression spring.

6. The drawer of any one of the preceding claims, wherein the drawer front is arranged in a plane that deviates less than 20° from a plane normal to the horizontal plane, more preferably the deviation is less than 10°, or most preferably the deviation is less than 5°.

7. The drawer of any one of the preceding claims, wherein the guide structure includes elements arranged on the drawer front that are slideably engaged with elements arranged on the sides or on a inner front wall of the drawer body.

8. The drawer of any claim 7, wherein one of said elements is a notch and the other one of said elements is a protrusion adapted to slidably engage said notch.

9. The drawer of any one of the preceding claims, wherein an upper surface of the drawer front forms a stepping surface, and wherein the stepping surface preferably includes a friction surface, such as friction strips.

10. The drawer according to claim 9, wherein the stepping surface has a depth between 50 mm and 100 mm.

11. The drawer of any one of claims 9 or 10, wherein an underside of the stepping surface is provided with a recess that forms a gripping handle.

12. The drawer of any one of claims 9 to 11, wherein the stepping surface protrudes out from the drawer space also when the drawer has been fully retracted into the drawer space.

13. A drawer according to any of the preceding claims, wherein a lower surface of the drawer front is provided with a resilient element, such as a rubber layer.

14. The drawer of any one of the preceding claims, wherein said vehicle is a truck and the drawer is arranged in a drawer space within a cab of the truck.

15. A vehicle comprising a drawer of any one of the preceding claims arranged in a drawer space within said vehicle, and wherein the vehicle further preferably comprises a sleeper bunk, whereby the drawer space is arranged beneath said sleeper bunk.
